# EUROPEAN PATENT SPECIFICATION

(11) **EP 2 065 892 B1**
(45) Date of publication and mention of the grant of the patent: **19.05.2010**
(21) Application number: 08715223.7
(22) Date of filing: 13.03.2008
(51) Int. Cl.: G11B 33/12, G06F 1/30

(54) **DISK ARRAY APPARATUS**
SPEICHERPLATTENANORDNUNGSGERÄT
APPAREIL DE RÉSEAU DE DISQUES

(30) Priority: 13.04.2007 CN 200720104254 U
(43) Date of publication of application: 03.06.2009
(73) Proprietor: Huawei Technologies Co., Ltd., Longgang District, Shenzhen Guangdong 518129 (CN)
(72) Inventor: LV, Xianhong, Shenzhen Guangdong 518129 (CN); ZHANG, Liyuan, Shenzhen Guangdong 518129 (CN); XIE, Changjiang, Shenzhen Guangdong 518129 (CN)
(74) Representative: Thun, Clemens
(86) International application number: PCT/CN2008/070487
(87) International publication number: WO 2008/125039

(56) References cited:
- EP-A1- 0 610 133
- EP-A2- 1 411 523
- CN-A- 1 307 260
- CN-A- 1 869 880
- CN-Y- 201 036 001
- JP-A- 10 063 380
- US-A- 4 907 183
- US-A- 5 915 122

## Description

### FIELD

The present invention relates to storage technologies, and in particular, to a disk array apparatus.

### BACKGROUND

With the development of information technologies, the data amount that needs to be stored is increasing, and mass storage devices are required. Disk arrays are mass storage devices. A disk array puts several disks together, and has a high-capacity Cache for buffering host data. When the power supply of the system fails abruptly, the data may be lost if the data in the Cache is not written into the disk in time. Therefore, a method for continuing power supply to the disk array in the case of abnormal power failure of the system needs to be applied to prevent loss of data in the Cache of the disk array.

Currently there are two apparatuses for powering a disk array:

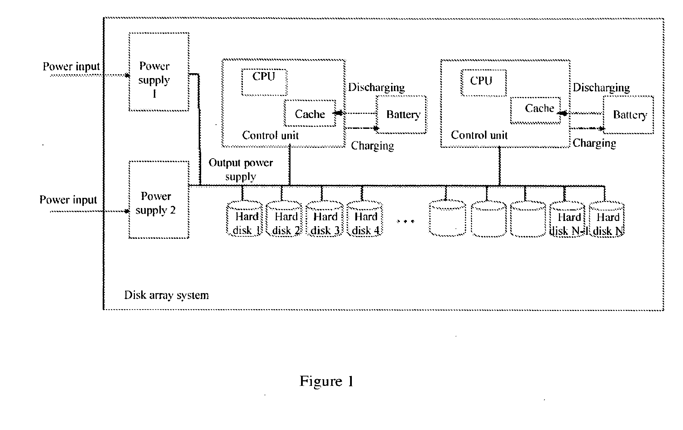

As shown in Figure 1, a conventional disk array apparatus according to the related art puts a battery inside. When the input power of the system is normal, the power equipment outputs voltage to the disk array. When the input power of the system fails, the battery inside the disk array supplies power to the Cache instead, and the Cache keeps being powered for a certain period to go on working normally and prevent data loss in the disk array. When the input power recovers, the power equipment still outputs voltage to the disk array to keep normal operation.

In the process of researching the present invention, the inventors find that: In the related art as shown in Figure 1, if the input power does not recover, the standby battery needs to supply power to all disks and memories of the disk array, and is thus exhausted quickly; consequently, the data in the Cache is still vulnerable to be lost.

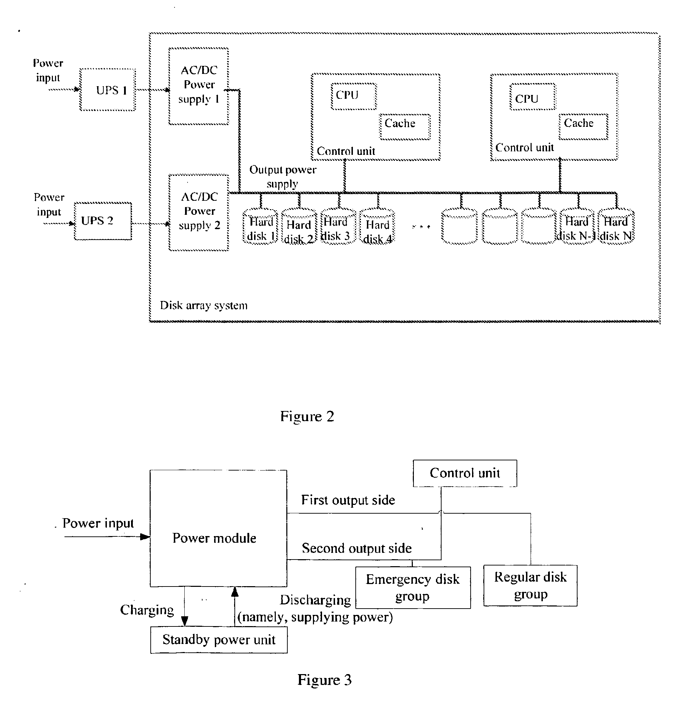

As shown in Figure 2, another conventional disk array apparatus according to the related art adds an Uninterrupted Power System (UPS) before the power equipment. When the input power of the system fails, the UPS supplies standby power to the power equipment to keep normal operation, and the power equipment supplies power to all disks and memories in the disk array. Within the limited standby power time of the UPS, the data stored in the disk array is written into the disks immediately, and then the UPS is shut down.

In the process of researching the present invention, the inventors find that: In the related art as shown in Figure 2, if the input power fails, the UPS must have a high power in order to supply power to all disks and memories in the disk array. Therefore, the size of the UPS needs to be large, which increases the cost of the whole power equipment. Moreover, the large size of the UPS generally requires the UPS to be installed outside the disk array frame, which increases cable connections between the UPS and the power equipment and the disk array, and makes the maintenance more difficult.

US patent No. 5,915,122 A discloses a magnetic disk apparatus which is used as a subsystem of a computer system, in particular a medium-sized computer system which uses commercial power and does not have its own backup power, provided with a plurality of directors, a plurality of magnetic disk modules commonly accessed from the plurality of directors, a plurality of director batteries for supplying power individually to the plurality of directors, magnetic disk module batteries for supplying power to the magnetic disk modules, and a power controller for independently controlling the supply of power from the plurality of director batteries and magnetic disk module batteries in accordance with the operating state of the plurality of directors and magnetic disk modules.

EP Publication No. 1411523 A2 discloses a disk array device and a method of supplying power to a disk array device to which power is supplied by at least two AC inputs are provided. Where at least two AC/DC power-supply groups are provided in correspondence with each of the AC inputs and each AC/DC power-supply group includes at least two AC/DC power supplies that are connected to the AC input corresponding to that group, outputs from the AC/DC power supplies are summed separately for each group to obtain group total outputs for each group, and the group total outputs are input to each of a plurality of loads in the disk array device to provide power to each of the loads.

CN Publication No. 1307260 A discloses an Un-interrupted power apparatus for automatic storing data. The Un-interrupted power apparatus includes a power detection circuit, a power managing circuit, a mainboard power supply circuit, a hard disk power supply circuit, a power switching circuit, a charging circuit, and a rechargeable battery. The charging circuit is connected to a power supply of a computer to charging the rechargeable battery. Two outputs of the power switching circuit are connected to a mainboard and a hard disk respectively. The power detection circuit sends a power-off signal to the power managing circuit when the power detection circuit detects the power supply of the computer is interrupted. In response to the power-off signal, the power managing circuit controls the power switching circuit to switch the power supplier from the power supply of the computer to the rechargeable battery to provide power to the mainboard and the hard disk.

CN Publication No. 1869880 A discloses a disk storage system. The disk storage system includes a control unit, a plurality of electric switches controlled by the control unit, and a plurality of storage units connected to the electric switches respectively, the control unit controls the electric switches to turn on or off the power provided to the storage units.

### SUMMARY

The present invention may obviate one or more drawbacks or limitations inherent in the related art. For example, an embodiment provides a disk array apparatus to improve the reliability and stability of the disk array in supplying power and to reduce the cost and size of the apparatus.

A disk array apparatus provided in an embodiment of the present invention includes a power module, a control unit, a first disk group, a second disk group, and a standby power unit. The power module includes a first input side connected to the power input lead and a second input side connected to the standby power unit. The power module further includes a first output side connected to the second disk group and a second output side connected to the first disk group and the control unit. When the power input of the power input lead is normal, the input power is output through the first output side and the second output side of the power module. When the power input of the power input lead is abnormal, the power input by the standby power unit is output through the second output side of the power module.

The disk array apparatus in an embodiment of the present invention divides the disk array into a first disk group and a second disk group. When the power input by the power input side is abnormal, the power module supplies power only to partial hardware (the first disk group) in the disk array to keep its normal operation, thus preventing the data to be stored in the first disk group from loss, improving the reliability and stability of the power supplied by the power module to the disk array, reducing the standby power capacity of the standby power unit, and reducing the cost and size of the power module.

### BRIEF DESCRIPTION OF THE DRAWINGS

Figure 1 is a block diagram of a conventional disk array apparatus according to the related art;

Figure 2 is a block diagram of another conventional disk array apparatus according to the related art;

Figure 3 shows a disk array apparatus according to a first embodiment of the present invention;

Figure 4 shows a disk array apparatus according to a second embodiment of the present invention; and

Figure 5 shows a structure of a power module according to an embodiment of the present invention.

### DETAILED DESCRIPTION

A disk array apparatus provided in an embodiment of the present invention includes a power module, a control unit, a first disk group, a second disk group, and a standby power unit.

The power module includes a first input side connected to the power input lead which supplies power to the disk array apparatus at normal time and a second input side connected to the standby power unit. The power module further includes a first output side connected to the second disk group and a second output side connected to the first disk group and the control unit. When the input power of the power input side is normal (namely, the power input lead can supply power normally), the input power is output through the first output side and the second output side of the power module. When the input power of the power input side is abnormal (namely, the power supply is abnormal, for example, interrupted), the power input by the standby power unit is output through the second output side of the power module. The control unit is adapted to control the storage process of the second disk group and the first disk group.

In the embodiments of the present invention, the apparatus may further include an adjusting unit, which is connected to the first output side and the second output side for adjusting the quantity of disks included in the first disk group. More specifically, by adjusting the state of the control switch in the control circuit, the adjusting unit shifts the connection relation between each disk and the first output side and the second output side, thus adjusting the quantity of disks or exercising control through software.

In an embodiment of the present invention, the second disk group and the first disk group may include at least one disk for storing data.

In the embodiments of the present invention, a disk array apparatus may includes one or multiple power modules. If a disk array apparatus includes multiple power modules, every power module may be connected to a standby power unit. There may be one or multiple control units in a disk array apparatus. If there are multiple control units in a disk array apparatus, every control unit is connected to the second output side of the power module in order to obtain power from the second input side.

Besides, the standby power unit may include a standby battery or a UPS. The standby battery may be a chargeable battery. When the power input side inputs power normally, the input power charges the standby battery through the power module. Therefore, the battery may supply power as a standby power unit in the case of failure of the mains supply.

In the embodiments of the present invention, the first disk group is also known as an emergency disk group. The disks in the first disk group can still store data after failure of the mains supply, thus avoiding data loss. The second disk group is also known as a regular disk group, and the disks in the regular disk group are used to store data only when the mains supply is normal. The present invention is hereinafter described in detail by reference to preferred embodiments and accompanying drawings.

As shown in Figure 3, a disk array apparatus according to a first embodiment of the present invention includes a power module(10), a control unit(20), a first disk group(30) such as an emergency disk group, a second disk group(40) such as a regular disk group, and a standby power unit(50) which has a chargeable battery.

The power module is connected to the power input lead and the standby power unit(50) through a first input side(12) and a second input side(14) respectively, in order to obtain power from the power input lead and the standby power unit(50). The power module(10) further includes a first output side(16) connected to the regular disk group and a second output side(18) connected to the emergency disk group and the control unit(20), where the regular disk group is powered by the output voltage output by the first output side(16), and the emergency disk group and the control unit are powered by the output of the second output side(18).

The process of the embodiment as shown in Figure 3 is as follows:

When the first input side(12) inputs power normally, the power input through the power input lead is output through the first output side(16) and the second output side(18) of the power module(10), in order to ensure normal power supply to the regular disk group, emergency disk group, and control unit(20). Meanwhile, the standby power unit(50) may be charged through the power input by the power input lead.

When the first input side(12) is unable to obtain the input power normally, the power input by the standby power unit(50) is output through the second output side(18) of the power module(10). That is, the emergency disk group and control unit(20) are powered only by the standby power unit(50). This ensures work of the disk array and reduces power consumption of the standby power unit.

For the emergency disk group, the memory data in the disk array may be stored in the case of failure of the mains supply. Moreover, the quantity of disks is automatically adjustable according to the quantity of control units in the disk array.

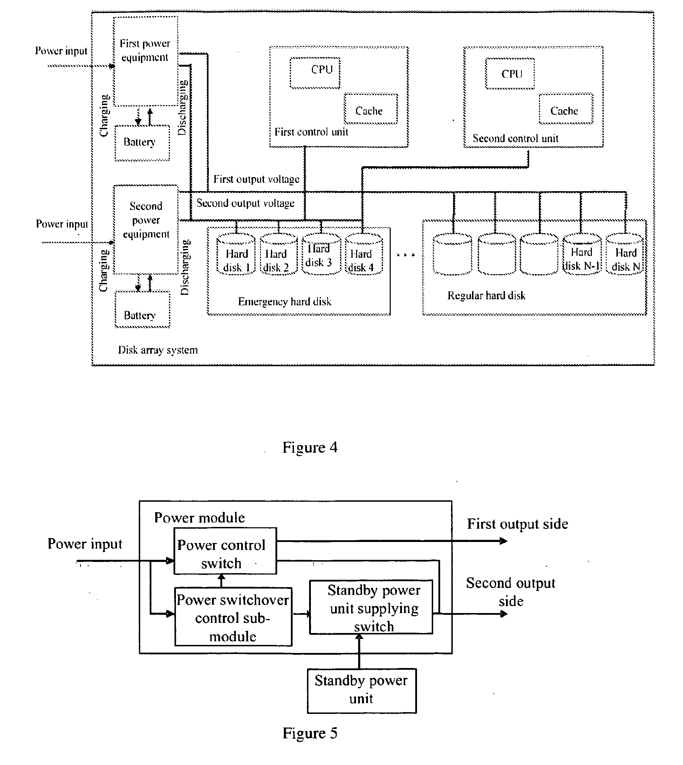

As shown in Figure 4, a disk array apparatus according to a second embodiment of the present invention includes two power modules, two control units, an emergency disk and a regular disk group (in practice, both the emergency disk group and the regular disk group may be hard disks but are not limited to hard disks), and two standby power units.

Each of the two power modules (supposed to be the first power module and the second power module) is connected with the corresponding power input lead and the standby power unit through a first input side and a second input side respectively, in order to obtain power from the power input lead and the standby power unit. Each of the two power modules includes a first output side connected to a regular disk group and a second output side connected to an emergency disk group and a control unit, where the regular disk group is powered by the power (generally known as "output voltage") output by the first output side, and the emergency disk group and the control unit are powered by the power output by the second output side.

The process of the embodiment as shown in Figure 4 is as follows:

When the first input side inputs power normally, the power input through the power input lead is output through the two first output sides and the two second output sides of the power module, in order to ensure normal power supply to the regular disk group, emergency disk group and control unit. Meanwhile, the two standby power units may be charged through the power input by the power input lead.

When the first input side is unable to obtain the input power normally, the power input by the standby power unit is output through the two second output sides of the power module. That is, the emergency disk group and the control unit are powered only by the standby power unit. This ensures work of the disk array and reduces power consumption of the standby power unit.

The emergency disk group in this embodiment includes four disks (or any other quantity of disks), as shown in Figure 4, and remaining disks serve as regular disk groups. The emergency disk group saves the memory data in the disk array in the case of failure of the mains supply. Therefore, the memory data of the disk array is written into the working emergency disk group in time and protected properly before power-off.

Generally, the quantity of disks in an emergency disk group is adjustable according to the quantity of control units in the disk array apparatus or according to the actual requirements.

The two power modules in this embodiment (in practice, there may be more than two power modules) may work concurrently in the active-standby mode. That is, one power module is active, and the other is standby. The two control units in this embodiment (in practice, there may be more than two control units) may work concurrently in the active-standby mode. That is, one control unit is active, and the other is standby. The active-standby working mode is intended to improve the reliability of the disk array apparatus. Failure of one power module and/or control unit does not affect the normal operation of the disk array apparatus disclosed herein.

As shown in Figure 5, a power module in the foregoing two embodiments may include: a power switchover control sub-module connected to the power input lead, and a standby power unit supplying switch located between the standby power unit and the second output side.

The power switchover control sub-module is adapted to detect whether the power input of the power input lead is normal. If the power input of the power input lead is normal, control the standby power unit supplying switch to turn off, namely, the second output side is powered by the power input lead; if the power input of the power input lead is not normal, control the standby power unit supplying switch to turn on, thus facilitating the standby power unit to supply power to the second output unit.

Alternatively, the power module may further include a power control switch located between the power input lead and the first and second output sides. The power control switch is adapted to control the connectivity between the power input lead and the first and second output sides. When the power switchover control sub-module detects that the power input of the power input lead is normal, the power control switch is turned on so that the power input lead may supply power to the first output side and the second output side; when the power switchover control sub-module detects that the power input of the power input lead is abnormal, the power control switch is turned off so that the second output side is powered by only the standby power unit.

Besides, in the foregoing two embodiments, the standby power unit includes a standby battery or a UPS. If the standby power unit is built-in, a standby battery is generally applied. If the standby power unit is external, a UPS is generally applied. The standby battery may be chargeable. When the input power of the power input side is normal, the standby battery is charged by the input power through the power module. In practice, when the mains supply is normal, the power module charges the standby power unit automatically. Once the mains supply fails, the power module stops charging the standby power unit, and the standby power unit discharges power to the power module automatically to keep its normal operation for a certain period.

Therefore, after the mains supply fails, the standby power unit supplies power to partial disks (namely, the disks in the emergency disk groups) in the disk array through the power module. The actual working power of the disk array is less than the working power which exists at the time of normal mains supply. Therefore, the required standby power capacity of the standby power unit is also less, and the cost of the power module is reduced.

Because the standby power capacity is little and the size of the standby power unit is small, the power module and the standby power unit may be embedded into the disk array (composed of an emergency disk group and a regular disk group). Therefore, integrated design of the disk array apparatus is enabled; fewer cables are required between the power module, standby power unit, and disk array; and it is easier to maintain and operate the disk array. Moreover, the fan built in the power module may dissipate heat of the whole disk array (including the power module), and no extra fan is required for the disk array, thus reducing the cost of the whole system.

In summary, the technical solution under the embodiments of the invention supplies power separately through the disks in the disk array. When the mains supply fails, the standby battery discharges power to the power module to extend the operation time of the power module. In this case, the power module supplies power only to the control unit and emergency disk group in the disk array, thus overcoming the defect of the related art. That is, the standby battery is exhausted quickly and the data is vulnerable to loss when the standby battery supplies power to all components in the related art. Therefore, through the present invention, the data is stored in the emergency disk group securely in the case of input power failure, and the required standby power capacity of the standby battery is reduced.

Moreover, in the technical solution under the embodiments of the present invention, the disk array is powered by two power modules concurrently. Once one power module fails, the other serves as a standby power supply to the disk array, thus ensuring secure storage of the memory data in the active regular disk group and improving the reliability and stability of the system.

The foregoing descriptions are merely illustrative of the preferred embodiments but not intended to limit the scope of the claims, and various modifications and variations may be made by those skilled in the art without departing from the present invention as defined in the appended claims.

## Claims

1. A disk array apparatus, comprising at least a power module (10), at least a control unit (20), a first disk group (30), a second disk group (40), and at least a standby power unit (50), wherein: the power module comprises
a first input side (12) connected to a power input lead and a second input side (14) connected to the standby power unit (50); **characterized in that**
a first output side (16) is connected to a second disk group; and
a second output side (18) is connected to a first disk group (30) and a control unit (20); wherein the power module is configured such that:
when power input of the power input lead is detected to be normal, the power input of the power input lead is output through the first output side (16) and the second output side (18) of the power module (10); and
when the power input of the power input lead is detected to be abnormal, the power input by the standby power unit is output (50) only through the second output side (18) of the power module (10).

2. The disk array apparatus according to claim 1, wherein:
if there are multiple power modules, every power module (10) is connected to a standby power unit (50).

3. The disk array apparatus according to claim 1, wherein:
if there are multiple control units, every control unit is connected to the second output side (18) of the power module.

4. The disk array apparatus according to claim 1, wherein the power module comprises a power switchover control sub-module connected to the power input lead, and a standby power unit supplying switch located between the standby power unit and the second output side (18), wherein:
the power switchover control sub-module is adapted to detect whether the power input of the power input lead is normal, and: control the standby power unit supplying switch to turn off, if the power input of the power input lead is normal; or control the standby power unit supplying switch to turn on, if the power input of the power input lead is not normal.

5. The disk array apparatus according to claim 4, wherein the power module further comprise a power control switch located between the power input lead and the first and second output sides(16, 18) and connected with the power switchover control sub-module, wherein:
when the power switchover control sub-module detects that the power input of the power input lead is normal, the power control switch is turned on; and
when the power switchover control sub-module detects that the power input of the power input lead is abnormal, the power control switch is turned off.

6. The disk array apparatus according to any one of claims 1-5, wherein:
the standby power unit (50) comprises a standby battery or an Uninterrupted Power Supply, UPS.

7. The disk array apparatus according to claim 6, wherein:
the standby battery is chargeable; and
when the power input is normal, the standby battery is charged by the input power through the power module.

8. The disk array apparatus according to any one of claims 1-5, wherein:
the apparatus further comprises an adjusting unit connected with the first output side (16) and the second output side (18), and is adapted to adjust a quantity of disks in the first disk group (30).

## Patentansprüche

1. Disk-Array-Vorrichtung mit mindestens einem Stromversorgungsmodul (10), mindestens einer Steuereinheit (20), einer ersten Disk-Gruppe (30), einer zweiten Disk-Gruppe (40) und mindestens einer Standby-Stromversorgungseinheit (50), wobei das Stromversorgungsmodul Folgendes umfasst:
eine erste Eingangsseite (12), die mit einer Stromversorgungseingangsleitung verbunden ist, und eine zweite Eingangsseite (14), die mit der Standby-Stromversorgungseinheit (50) verbunden ist; **dadurch gekennzeichnet, dass** eine erste Ausgangsseite (16) mit einer zweiten Disk-Gruppe verbunden ist; und
eine zweite Ausgangseite (18) mit einer ersten Disk-Gruppe (30) und einer Steuereinheit (20) verbunden ist; wobei das Stromversorgungsmodul so konfiguriert ist, dass,
wenn detektiert wird, dass die Stromversorgung der Stromversorgungseingangsleitung normal ist, die Stromversorgung der Stromversorgungseingangsleitung durch die erste Ausgangsseite (16) und die zweite Ausgangsseite (18) des Stromversorgungsmoduls (10) ausgegeben wird; und
wenn detektiert wird, dass die Stromversorgung der Stromversorgungseingangsleitung abnorm ist, die Stromversorgung durch die Standby-Stromversorgungseinheit (50) nur durch die zweite Ausgangsseite (18) des Stromversorgungsmoduls (10) ausgegeben wird.

2. Disk-Array-Vorrichtung nach Anspruch 1, wobei,
wenn mehrere Stromversorgungsmodule vorliegen, jedes Stromversorgungsmodul (10) mit einer Standby-Stromversorgungseinheit (50) verbunden ist.

3. Disk-Array-Vorrichtung nach Anspruch 1, wobei,
wenn mehrere Steuereinheiten vorliegen, jede Steuereinheit mit der zweiten Ausgangseite (18) des Stromversorgungsmoduls verbunden ist.

4. Disk-Array-Vorrichtung nach Anspruch 1, wobei das Stromversorgungsmodul ein mit der Stromversorgungseingangsleitung verbundenes Stromversorgungs-Umschaltsteuersubmodul und einen zwischen der Standby-Stromversorgungseinheit und der zweiten Ausgangsseite (18) angeordneten Standby-Stromversorgungseinheit-Zuführungsschalter umfasst, wobei
das Stromversorgungs-Umschaltsteuersubmodul dafür ausgelegt ist zu detektieren, ob der Stromversorgungseingang der Stromversorgungseingangsleitung normal ist, und den Standby-Stromversorgungseinheit-Zuführungsschalter auf Ausschalten zu steuern, wenn der Stromversorgungseingang der Stromversorgungseingangsleitung normal ist; oder den Standby-Stromversorgungseinheit-Zuführungsschalter auf Einschalten zu steuern, wenn der Stromversorgungseingang der Stromversorgungseingangsleitung nicht normal ist.

5. Disk-Array-Vorrichtung nach Anspruch 4, wobei das Stromversorgungsmodul ferner einen zwischen der Stromversorgungseingangsleitung und der ersten und zweiten Ausgangsseite (16, 18) befindlichen und mit dem Stromversorgungs-Umschaltsteuersubmodul verbundenen Stromversorgungs-Steuerschalter umfasst, wobei,
wenn das Stromversorgungs-Umschaltsteuersubmodul detektiert, dass der Stromversorgungseingang der Stromversorgungseingangsleitung normal ist, der Stromversorgungs-Steuerschalter eingeschaltet wird; und
wenn das Stromversorgungs-Umschaltsteuersubmodul detektiert, dass der Stromversorgungseingang der Stromversorgungseingangsleitung abnormal ist, der Stromversorgungs-Steuerschalter ausgeschaltet wird.

6. Disk-Array-Vorrichtung nach einem der Ansprüche 1-5, wobei die Standby-Stromversorgungseinheit (50) eine Standby-Batterie oder eine ununterbrochene Stromversorgung UPS umfasst.

7. Disk-Array-Vorrichtung nach Anspruch 6, wobei
die Standby-Batterie aufladbar ist; und
wenn der Stromversorgungseingang normal ist, die Standby-Batterie durch das Stromversorgungsmodul über die Eingangsstromversorgung geladen wird.

8. Disk-Array-Vorrichtung nach einem der Ansprüche 1-5, wobei
die Vorrichtung ferner eine mit der ersten Ausgangsseite (16) und der zweiten Ausgangsseite (18) verbundene Justiereinheit umfasst und dafür ausgelegt ist, eine Menge von Disks in der ersten Disk-Gruppe (30) zu justieren.

## Revendications

1. Appareil à matrice de disques, comprenant au moins un module d'alimentation (10), au moins une unité de commande (20), un premier groupe de disques (30), un deuxième groupe de disques (40) et au moins un bloc d'alimentation de réserve (50), dans lequel le module d'alimentation comprend :
un premier côté d'entrée (12) connecté à un fil d'entrée d'alimentation et un deuxième côté d'entrée (14) connecté au bloc d'alimentation de réserve (50) ;
**caractérisé en ce que**
un premier côté de sortie (16) est connecté à un deuxième groupe de disques ; et
un deuxième côté de sortie (18) est connecté à un premier groupe de disques (30) et à une unité de commande (20) ; dans lequel le module d'alimentation est configuré de façon à ce que
lorsque l'entrée d'alimentation du fil d'entrée d'alimentation est détectée comme étant normale, l'entrée d'alimentation du fil d'entrée d'alimentation est fournie à travers le premier côté de sortie (16) et le deuxième côté de sortie (18) du module d'alimentation (10) ; et
lorsque l'entrée d'alimentation du fil d'entrée d'alimentation est détectée comme étant anormale, l'entrée d'alimentation par le bloc d'alimentation de réserve est fournie (50) seulement à travers le deuxième côté de sortie (18) du module d'alimentation (10).

2. Appareil à matrice de disques selon la revendication 1, dans lequel s'il y a plusieurs modules d'alimentation, chaque module d'alimentation (10) est connecté à un bloc d'alimentation de réserve (50).

3. Appareil à matrice de disques selon la revendication 1, dans lequel s'il y a plusieurs unités de commande, chaque unité de commande est connectée au deuxième côté de sortie (18) du module d'alimentation.

4. Appareil à matrice de disques selon la revendication 1, dans lequel le module d'alimentation comprend un sous-module de commande de commutation d'alimentation connecté au fil d'entrée d'alimentation, et un commutateur d'alimentation de bloc d'alimentation de réserve situé entre le bloc d'alimentation de réserve et le deuxième côté de sortie (18), dans lequel le sous-module de commande de commutation d'alimentation est adapté de façon à détecter si l'entrée d'alimentation du fil d'entrée d'alimentation est normale, et commander au commutateur d'alimentation du bloc d'alimentation de réserve de se mettre hors circuit, si l'entrée d'alimentation du fil d'entrée d'alimentation est normale ou commander au commutateur d'alimentation du bloc d'alimentation de réserve de se mettre en circuit, si l'entrée d'alimentation du fil d'entrée d'alimentation n'est pas normale.

5. Appareil à matrice de disques selon la revendication 4, dans lequel le module d'alimentation comprend en outre un commutateur de commande d'alimentation situé entre le fil d'entrée d'alimentation et le premier et le deuxième côté de sortie (16, 18) et connecté avec le sous-module de commande de commutation d'alimentation, dans lequel
lorsque le sous-module de commande de commutation d'alimentation détecte que l'entrée d'alimentation du fil d'entrée d'alimentation est normale, le commutateur de commande d'alimentation est mis en circuit et
lorsque le sous-module de commande de commutation d'alimentation détecte que l'entrée d'alimentation du fil d'entrée d'alimentation est anormale, le commutateur de commande d'alimentation est mis hors circuit.

6. Appareil à matrice de disques selon l'une quelconque des revendications 1 à 5, dans lequel :
le bloc d'alimentation de réserve (50) comprend une pile de réserve ou un système d'alimentation sans coupure, ASC.

7. Appareil à matrice de disques selon la revendication 6, dans lequel :
la pile de réserve est chargeable ; et
lorsque l'entrée d'alimentation est normale, la pile de réserve est chargée par l'alimentation d'entrée par l'intermédiaire du module d'alimentation.

8. Appareil à matrice de disques selon l'une quelconque des revendications 1 à 5, dans lequel :
cet appareil comprend en outre un dispositif de réglage connecté avec le premier côté de sortie (16) et le deuxième côté de sortie (18), et est adapté de façon à régler une quantité de disques dans le premier groupe de disques (30).
